# EUROPEAN PATENT SPECIFICATION

(11) **EP 2 871 768 B1**
(45) Date of publication and mention of the grant of the patent: **20.02.2019**
(21) Application number: 13005285.5
(22) Date of filing: 09.11.2013
(51) Int. Cl.: B25F 5/00, H02P 3/12, H02P 7/295, H02P 25/04

(54) **Circuit arrangement for switching a single-phase series motor**
Schaltungsanordnung zum Schalten eines einphasigen Reihenmotors
Agencement de circuit pour la commutation d'un moteur de série monophasé

(43) Date of publication of application: 13.05.2015
(73) Proprietor: Illinois Tool Works Inc., Glenview, IL 60025 (US)
(72) Inventor: Katz, Johannes, 91126 Schwabach (DE); Krieg, Martin, Dr., 91578 Leutershausen (DE); Tournier, Ludovic, 38160 Saint Marcellin (FR); Gleizolles, Michel, 26320 Saint marcel Les Valence (FR); Kolár, Jan, 388 01 Blatná (CZ)
(74) Representative: Trinks, Ole

(56) References cited:
- EP-A2- 0 578 366
- WO-A1-00/41294
- DE-A1- 4 201 023
- DE-A1-102011 110 929
- GB-A- 2 081 993
- US-A- 4 568 864

## Description

The present invention concerns a circuit arrangement for switching a single-phase series motor between a motor mode and a braking mode according to the preamble of claim 1, a hand-held power tool with a single-phase series motor for driving the hand-held power tool according to the preamble of claim 15 and a rotation control module for a hand-held power tool with a single-phase series motor for driving the hand-held power tool according to the preamble of claim 16.

Single-phase series motors, which are also known under the name of universal motors, are employed in a variety of different devices. In particular, single-phase series motors are used for driving hand-held power tools. Such a single-phase series motor comprises a stator with field coils, which field coils are electrically connected in series with the windings of a rotor through a commutator of the rotor. In principle, a single-phase series motor can equally operate on AC (alternating current) and DC (direct current) electrical power, with operation on AC electrical power being the default case to be considered in the following. Especially when the single-phase series motors is used in certain kinds of power tools, rotation control and in particular the ability to quickly and reliably brake the single-phase series motor is often of critical importance for reasons of operational safety. One such example would be a drill or hammer type hand-held power tool.

One approach for braking a single-phase series motor known from the prior art, in particular from the published patent application DE 42 01 023 A1, involves the use of mechanical switches for changing the electrical arrangement of the stator field coils and the rotor windings from a motor electrical connection between two terminals of a single-phase supply voltage to a braking electrical connection of the stator field coils and the rotor winding, in which a braking current generated in the rotor windings passes through the stator field coils, thereby generating a magnetic field which acts to brake the movement of the rotor which generated the braking current in the first place. To achieve this effect, the relative polarity of the rotor windings and the stator field coils in their connection is switched between the motor electrical connection and the braking electrical connection.

In DE 10 2011 110 929 A1 and EP 0 578 366 A2 switches are used for the switching between the motor mode switching state and the braking mode switching state. In EP 0 578 366 A2 additionally to a switch between a stator coil and rotor two triacs are used in a braking switch arrangement for the switching between the motor mode switching state and the braking mode switching state.

In this way, a quick braking effect can be achieved which relies on the same components - in particular the stator with its field coils and the rotor with its windings - which are also used for driving the single-phase series motor in its normal mode of operation, i.e. the motor mode in which the electrical energy supplied by the single-phase supply voltage is converted into movement of the rotor. Accordingly, these two modes of operation of the single-phase series motor are hereinafter referred to as motor mode and braking mode, respectively.

For this braking technique described above, several aspects have been identified as important in the prior art. Firstly, an exact timing of the switching operation, involving the switching of a minimum of two switches, is important to be able to effect the switching operation at a well-defined state of magnetization of the stator. Here it may be important that the current magnetization of the stator is not too strong in the direction opposite to that desired for braking, otherwise a re-magnetization in the desired direction may be difficult to achieve. Secondly, both the switching operation to the braking mode and the retention of the switches in the braking mode has to be reliable. Any interruption or any subsequent re-opening of the switch closing the braking electrical connection during braking could lead to the loss of magnetizing current for the stator field coils, thereby removing the braking effect in a potentially irretrievable way. Even a statistically very rare occurrence of such a switch re-opening is inacceptable under safety considerations for a number of hand-held power tools. For these reasons and because electronic switches are considered insufficiently reliable, circuit arrangements for switching a single-phase series motor between a motor mode and a braking mode known from the prior art rely on mechanical or electromechanical switches such as relays.

Therefore, the problem of the invention lies in providing an improved mechanism for switching a single-phase series motor between a motor mode and a braking mode in terms of size, reliability and production costs.

The above noted problem is solved with regard to a circuit arrangement for switching a single-phase series motor between a motor mode and a braking mode according to the preamble of claim 1 with the features of the characterizing part of claim 1. With regard to a hand-held power tool according to the preamble of claim 14, the above noted problem is solved with the features of the characterizing part of claim 14. With regard to a rotation control module for a hand-held power tool according to the preamble of claim 15 the above noted problem is solved with the features of the characterizing part of claim 15.

The invention is based on the recognition that a bidirectional triode thyristor, hereinafter referred to as triac, provides a suitable electronic component for a switching arrangement for switching the single-phase series motor between a motor mode and a braking mode. It is known that a triac in a conducting state - also referred to as the triggered on state - generally remains in the triggered on state, independent of variations of the gate voltage, until the current through the main terminals dips below a certain minimum threshold, which minimum threshold is defined as the holding current. For this reason, timing the triggering off of a triac - which corresponds to a transition to the nonconducting state - can be controlled only to a limited degree.

Surprisingly, it has been found that this uncertainty with regard to timing the switching of the triac has no negative consequences when the triac is used for switching a single-phase series motor between the motor mode and the braking mode. In fact, this behavior permits some leeway in the timing control with regard to switching, thereby relaxing tolerances in control. At the same time, the aforedescribed behavior of the triac is also in fact advantageous for ensuring that a triac which is in its triggered on state, i.e. in the state where there is current flow between its main terminals, is actually more robust with regard to unwanted triggering off, i.e. with regard to a change to the non-conducting state between its main terminals, than other electronic components for which the timing of triggering on or triggering off more directly depends on the gate voltage.

The inventive use of triacs is advantageously used both for hand-held power tools with a circuit arrangement for switching between a motor mode and braking mode and for rotation control modules which can be used to retrofit a hand-held power tool in order to provide such a rotation control functionality.

The dependent claims 2 to 6 concern a preferred embodiment in which a triac is specifically used to be triggered on when switching to the braking mode. To ensure reliable operation, an advantageous gate snubber circuit is provided which makes such a triac even more resilient with regard to unwanted switching behavior, in particular unwanted triggering off.

Preferred embodiments according to the dependent claims 7 to 10 concern the provision of an excitation voltage arrangement in order to provide a voltage source to the stator coils for the initial excitation of the braking operation.

In the following, the invention shall be further explained in detail with reference to an illustration which shows a single embodiment of the invention. In the illustration,
- Fig. 1: presents the schematic of a circuit arrangement for switching a single-phase series motor as proposed and
- Fig. 2: presents a power drill which is a hand-held power tool as proposed in a schematic side view.

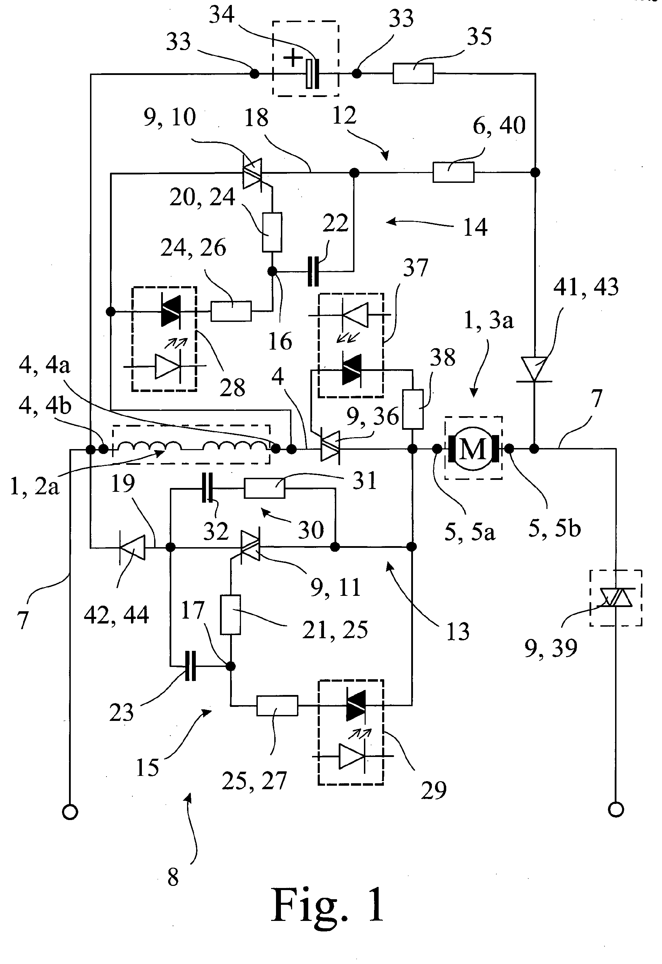

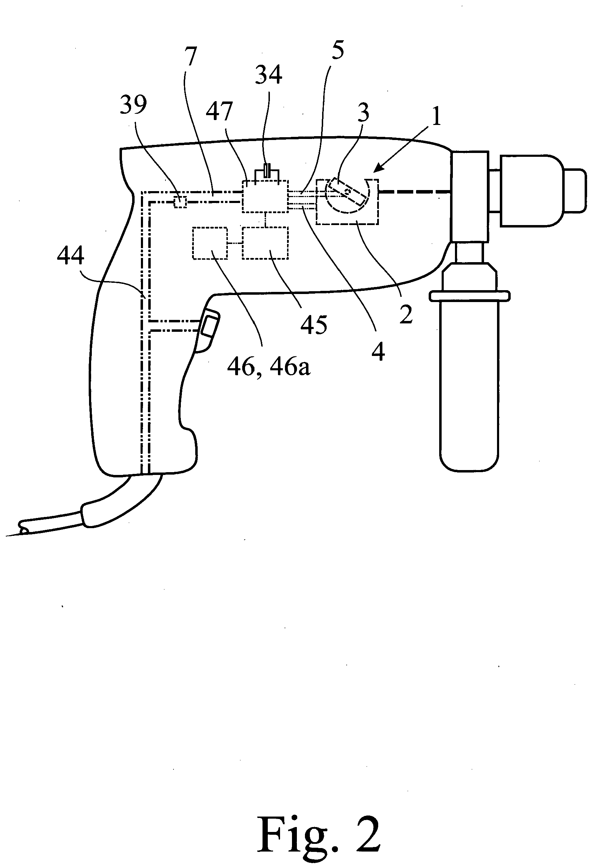

The circuit arrangement shown in Fig. 1 is for switching a single-phase series motor 1 between a motor mode and a braking mode. Fig. 2 shows a hand-held power tool, which here is a power drill and will be described in more detail below, in which the circuit arrangement of Fig. 1 is connected to such a single-phase series motor 1 and further components.

In Fig. 1 the single-phase series motor 1 is represented by the stator field coils 2a of its stator 2 and the rotor windings 3a of its rotor 3, which rotor 3 also comprises a commutator for electrically connecting to the rotor windings 3a. Accordingly, the circuit arrangement for switching the single-phase series motor 1 between a motor mode and a braking mode according to the proposal comprises stator field coil terminals 4, in particular for connecting to the stator field coils 2a, and rotor winding terminals 5, in particular for connecting to the rotor windings 3a through the commutator of the rotor 3, for the single-phase series motor 1. The circuit arrangement according to the proposal also comprises an electrical power dissipation element 6, phase voltage supply terminals 7 and a switching arrangement 8.

The phase voltage supply terminals 7 are, directly or indirectly, connected to a single phase AC voltage supply not shown in Fig. 1. According to the proposal, the switching arrangement 8 has a motor mode switching state, in which a motor current supplied by the phase voltage supply terminals 7 flows between the stator field coil terminals 4 and between the rotor winding terminals 5. The switching arrangement 8 also has a braking switching state in which a braking current supplied by the rotor winding terminals 5 at least partially flows between the stator field coil terminals 4 and through the electrical power dissipation element 6.

In other words, the switching arrangement 8, when changing its switching state, changes its electrical connections such that in the motor mode, there is essentially an electrical series connection of the stator field coil terminals 4 and the rotor winding terminals 5 in order that a phase voltage supplied by the phase voltage supply terminals 7 provides a motor current to operate the single-phase series motor 1 in the motor mode. Thus, the electrical power supplied by the phase voltage supply terminals 7 as motor current is converted to mechanical energy in the form of movement of the rotor 3. It is to be noted that the presence of further circuit components electrically arranged between the stator field coil terminals 4 and the rotor winding terminals 5 does not detract from the existence of the above electrical series connection of the stator field coil terminals 4 and the rotor winding terminals 5.

In the braking switching state of the switching arrangement 8, the electrical connections are changed such that no such motor current supplied by the phase voltage supply terminals 7 flows, but rather that a braking current, generated by the rotor 3 and more specifically generated by the rotor windings 3a moving in the magnetic field of the stator 2, is supplied by the rotor winding terminals 5 and flows through the stator field coils 2a via the stator field coil terminals 4 such that the resulting magnetic field of the stator 2 acts to brake, rather than to drive, the movement of the rotor 3. Due to the action of the commutator of the rotor 3, that braking current will generally be a unidirectional current. In this way, the single-phase series motor 1 can be said to generate its own electrical energy for braking.

Switching from the motor mode switching state to the braking mode switching state entails reversing the polarity of the electrical connection of the stator field coil terminals 4 and the rotor winding terminals 5. To wit, in the motor mode switching state, a first stator field coil terminal 4a is - at least indirectly - electrically connected to a first rotor winding terminal 5a. In the braking mode switching state, the first stator field coil terminal 4a is - at least indirectly - electrically connected to a second rotor winding terminal 5b. In addition, in the braking mode switching state, the first rotor winding terminal 5a is also electrically connected to a second stator field coil terminal 4b. Thus, when an electrical current flows through the stator field coil terminals 4 in a given direction when the switching arrangement 8 is in the motor mode switching state, that electrical current flows through the rotor winding terminals 5 in a resultant direction, which may here be called the resultant motor direction. When the switching arrangement 8 is in the braking mode switching state, the same electrical current through the stator field coil terminals 4 in the given direction results in an electrical current through the rotor winding terminals 5 in a direction opposite to said resultant motor direction in the above sense.

It is to be noted here that, as a first alternative, the above stator field coil terminals 4 may only connect to a portion or subset of the stator field coils 2a of the stator 2. In other words, the motor current or the braking current or both the motor current and the braking current in the context of the proposal may only flow through parts of the stator field coils 2a of the stator 2. In the second alternative, which is preferred, the stator field coil terminals 4 connect to the entirety of the stator field coils 2a of the stator. It is equally preferred that the braking current thus supplied by the rotor winding terminals 5 substantially completely flows between the stator field coil terminals 4 and through the electrical power dissipation element 6. The electrical power absorbed by the electrical power dissipation element 6 and turned into some other form of energy is the power that acts to brake the movement of the single-phase series motor 1, in particular the movement of the rotor 3 of the single-phase series motor 1. Thereby, the braking effect on the rotor 3 is proportional to the braking current flowing through the electrical power dissipation element 6.

The circuit arrangement according to the proposal is characterized in that the switching arrangement 8 comprises one or more bidirectional triode thyristors, also referred to as triacs 9, for switching between the motor mode switching state and the braking mode switching state.

In a preferred embodiment, the circuit arrangement is characterized in that the triacs 9 comprise at least one braking mode triac 10, 11 triggered on in the braking mode switching state for passing the braking current in a respective braking current branch 12, 13 and triggered off in the motor mode switching state. In the embodiment illustrated in Fig. 1 and as preferred, the triacs 9 comprise two braking mode triacs 10, 11, one braking mode triac 10, 11 for each of the two braking current branches 12, 13. It is to be noted that according to the embodiment of Fig. 1, the identical braking current flows through each of the braking current branches 12, 13. Triggering the braking mode triacs 10, 11 off in the motor mode switching state prevents the braking current from flowing. As already noted, the switching arrangement 8 electrically connects the stator field coil terminals 4 with the rotor winding terminals 5 such that the polarity of the braking current - in the braking mode switching state - flowing through the rotor winding terminals 5 is reversed with regard to the motor current - in the motor mode switching state - flowing through the rotor windings terminals 5 based on the direction of the respective braking current or motor current flowing through the stator field coil terminals 4. In particular, braking mode triac 10 electrically connects the first stator field coil terminal 4a with the second rotor winding terminal 5b. In addition, braking mode triac 11 electrically connects the first rotor winding terminal 5a with the second stator field coil terminal 4b. Here it has surprisingly been found advantageous in terms of reliability to employ braking mode triacs 10, 11 - which in principle support current flow in two directions - rather than unidirectional thyristors, even though the braking current is expected to be a unidirectional current.

It is further preferred that the switching arrangement 8 comprises a gate snubber circuit 14, 15 for controlling a gate voltage between a gate node 16, 17 and a main electrode node 18, 19 of the braking mode triac 10, 11. Preferably, the main electrode node 18, 19 is an MT1 main electrode node. Such a gate snubber circuit 14, 15 limits the rate of change in voltage and thereby mitigates or prevents the effects of interferences and voltage glitches which could otherwise cause unwanted switching behavior in the braking mode triacs 10, 11.

It is to be pointed out that the above gate node 16, 17 and the above main electrode node 18, 19 may either correspond to the respective terminal of the braking mode triac 10, 11 itself, which in the present embodiment is the case for the main electrode nodes 18, 19, or may, alternatively, correspond to a node separated by one or more resistors or other appropriate circuit components from the respective terminal of the braking mode triac 10, 11. The gate node 16, 17 and the main electrode node 18, 19 of the braking mode triac 10, 11 in this broader sense may be defined such that a current flowing into or out of the corresponding terminal of the braking mode triac 10, 11 also flows through the gate node 16, 18 or the main electrode node 18, 19, respectively. In the present embodiment, a respective gate resistor 20, 21 is arranged between each gate node 16, 17 and the gate terminal of the corresponding braking mode triac 10, 11. Further, for the present embodiment of Fig. 1, the switching arrangement 8 comprises a respective gate snubber circuit 14, 15 for each of the braking mode triacs 10, 11.

One possibility for implementing such a gate snubber circuit 14, 15 comprises the use of varistors. According to the preferred embodiment of Fig. 1, however, the gate snubber circuit 14, 15 comprises a gate snubber capacitor 22, 23 and a gate snubber resistor network 24, 25. Here it is further preferred that the gate voltage of the braking mode triac 10, 11 substantially drops across the gate snubber capacitor 22, 23. In the present case, the gate voltage may be defined as the voltage between the gate terminal and the MT1 main electrode terminal of the appropriate triac. The presence of the gate resistor 20, 21 arranged between the gate node 16, 17 and the gate terminal of the braking mode triac 10, 11 does not detract from the observation that the gate voltage as defined above substantially drops across the gate snubber capacitor 22, 23. Thereby, effective control of the gate voltage, which is relevant for the switching state of the braking mode triac 10, 11 is effected.

In a preferred embodiment, the gate snubber resistor network 24, 25 limits a gate current into a gate terminal of the braking mode triac 10, 11. For example and as illustrated in Fig. 1, the gate snubber resistor network 24, 25 may comprise the above-mentioned gate resistor 20, 21 and also a secondary gate resistor 26, 27. It is preferred that the gate snubber resistor network 24, 25 and the gate snubber capacitor 22, 23 form a T-arrangement which is centered on the gate node 16, 17 and in which the gate snubber capacitor 22, 23 electrically connects the gate node 16, 17 to the main electrode node 18, 19 of the braking mode triac 10, 11, the gate resistor 20, 21 electrically connects the gate node 16, 17 to the gate electrode of the braking mode triac 10, 11 and the secondary gate resistor 26, 27 electrically connects the gate node 16, 17 to the output node of a driver for the braking mode triac 10, 11. In order to achieve the preferred symmetrical T-arrangement with the gate snubber capacitor 22, 23 the resistance of the gate resistor 20, 21 is preferably identical to that of the secondary gate resistor 26, 27. In the preferred embodiment shown in Fig. 1, the gate snubber capacitor 22, 23 has a capacitance of 100 nF and a working voltage of 50 V and both the gate resistor 20, 21 and the secondary gate resistor 26, 27 have a resistance of 68 Ohm each.

It is further preferred that the switching arrangement 8 comprises a braking mode optocoupler 28, 29 for triggering the braking mode triac 10, 11. Such a braking mode optocoupler 28, 29 preferably presents a driver for the braking mode triac 10, 11 in the above sense. Optocouplers are advantageous for protecting a control circuit for switching, such as a microcontroller, from damage, especially when the switching concerns high currents and voltages as in the present case.

Preferably, the gate snubber circuit 14, 15 electrically connects an output terminal of the braking mode optocoupler 28, 29 with a gate terminal of the braking mode triac 10, 11. In the present embodiment, the gate snubber circuit 14, 15 connects an output terminal of the braking mode optocoupler 28, 29 with the gate terminal of the braking mode triac 10, 11 through a series arrangement of the gate resistor 20, 21 and the secondary gate resistor 26, 27 via the gate node 16, 17. Having the gate snubber circuit 14, 15 arranged on the output side of the driver of the triac, i.e. of the braking mode optocoupler 28, 29, as in the present case, has been found to be particularly advantageous for preventing unwanted triggering on or triggering off of the braking mode triacs 10, 11. In particular, the arrangement on the output side of the braking mode optocoupler 28, 29 permits the arrangement of the braking mode triacs 10, 11 in close physical proximity to the stator 2 and/or the rotor 3, where due to the high currents through the stator 2 and the rotor 3 interferences and other problematic electrical effects are regularly strongest.

Since the switching arrangement 8 comprises a respective gate snubber circuit 14, 15 for each braking mode triac 10, 11, i.e. two gate snubber circuits 14, 15 in the present embodiment, all above observation regarding specifics of the gate snubber circuit 14, 15 as well as the braking mode optocoupler 28, 29 equally apply - as preferred - to both gate snubber circuits 14, 15, the corresponding braking mode triacs 10, 11 and the braking mode optocouplers 28, 29.

Beside the gate snubber circuit 14, 15 just described, the switching arrangement 8 preferably also comprises a main electrode snubber circuit 30 for controlling in particular the rate of change of the voltage across the main terminals of the braking mode triac 11. Advantageously, the main electrode snubber circuit 30 comprises a main electrode snubber resistor 31 and a main electrode snubber capacitor 32 electrically connected in series across the main terminals of the braking mode triac 11. In the present embodiment, the main electrode snubber resistor 31 has a resistance of 68 Ohms and a power rating of 1 Watt. The main electrode snubber capacitor 32 of the present embodiment has a capacitance of 10 nF and a working voltage of 630 V.

The electrical power dissipation element 6 should only absorb power in the braking mode switching state. Consequently, it is preferred that the electrical power dissipation element 6 is arranged in an electrical series connection with the braking mode triac 10 in the braking current branch 12. In the present embodiment, there is only one power dissipation element 6. However, there may equally be any number of such electrical power dissipation elements 6 in any of the braking current branches 12, 13.

When switching from the motor mode to the braking mode, an initial current through the stator field coils 2a acting to generate the magnetic field which in turn generates the braking current in the rotor windings 3a is advantageously supplied. Accordingly, it is preferred that the circuit arrangement comprises excitation voltage terminals 33 for applying an excitation voltage across the stator field coil terminals 4 when the switching arrangement 8 is switched in the braking mode switching state. The excitation voltage terminals 33 are advantageously connected to some component, which may also be distinct from the circuit arrangement, which is configured to provide the above excitation voltage. After this initial excitation thus provided by the excitation voltage terminals 33, the braking current is generated by the movement of the rotor 3 without the need for an externally supplied excitation voltage.

It is preferred that the circuit arrangement comprises an excitation capacitor 34 electrically connected to the excitation voltage terminals 33. Preferably, the circuit arrangement further comprises an excitation resistor 35 electrically connected in series with the excitation capacitor 34. Here the excitation capacitor 34 and the excitation resistor 35 are preferably chosen with regard to their electrical parameters such that their associated time constant is adequate both for the discharging process, i.e. when providing the above-described initial current through the stator field coils 2a, as well as for the recharging process of the excitation capacitor 34.

Therefore it is preferred that the excitation capacitor 34 and the excitation resistor 35 define a time constant of between 5 ms and 100 ms. It is even further preferred that this time constant is between 10 ms and 50 ms and may in particular be between 20 ms and 40 ms. In the present embodiment, the excitation capacitor 34 has a capacitance of 100 uF with a working voltage of 400 V and the excitation resistor 35 has a resistance of 330 Ohm with a power rating of 1 Watt. Since a hand-held power tool is generally connected to a standard AC grid supply, the frequency of the phase voltage supply may be expected to be 50 Hertz or 60 Hertz.

For the excitation storage terminals 33 to be most effective it is preferred that the excitation storage terminals 33 are electrically connected in parallel with an electrical series connection of the stator field coil terminals 4 and the rotor winding terminals 5. As already noted, such an electrical series connection of the stator field coil terminals 4 and the rotor winding terminals 5 does not preclude the existence of further circuit elements between the stator field coil terminals 4 and the rotor winding terminals 5, as described in the following.

It is preferred that the one or more triacs 9 further comprise a motor mode triac 36 triggered on in the motor mode switching state for electrically connecting the stator field coil terminals 4 and the rotor winding terminals 5, in particular for electrically connecting the first stator field coil terminal 4a and the first rotor winding terminal 5a, and triggered off in the braking mode switching state. In other words, the triggering on and the triggering off of the motor mode triac 36 occurs reversed with regard to the triggering on and the triggering off of the braking mode triacs 10, 11. It is to be noted, however, that the relative timing of the triggering on and the triggering off of the motor mode triac 36 and the braking mode triacs 10, 11 need not be precisely synchronized. Consequently, there may be an intermediate, transient period during which both the motor mode triac 36 and the braking mode triacs 10, 11 are either both triggered on or both triggered off.

In the present, preferred embodiment, the switching arrangement 8 also comprises a motor mode optocoupler 37, an output of which is electrically connected to a gate terminal of the motor mode triac 36 for triggering on and triggering off the motor mode triac 36. A gate current limiting resistor 38, preferably having a resistance of 120 ohm, is electrically connected to an input terminal of the motor mode optocoupler 37 for limiting the gate current output to a gate terminal of the motor mode triac 36.

It is also preferred that the one or more triacs 9 comprise a supply phase triac 39, which supply phase triac 39 is triggered on in the motor mode switching state for passing the motor current and triggered off in the breaking mode switching state. In the present embodiment, the supply phase triac 39 is arranged between one of the phase voltage supply terminals 7 and a terminal of the - not shown here - single phase AC voltage supply. The supply phase triac 39 may equally be arranged between one of the rotor winding terminals 5 and one of the phase voltage supply terminals 7, between one of the stator field coil terminals 4 and another one of the phase voltage supply terminals 7 or between that other phase voltage supply terminal 7 and the other terminal of the single phase AC voltage supply. There may also be more than one such supply phase triac 39.

The aforementioned electrical power dissipation 6 may comprise a semiconductor element and in particular a switchable semiconductor element for absorbing electrical power. This would, in principle, permit some control over the electrical power absorbed during braking at different times. However, it has turned out that if, as preferred, the electrical power dissipation element 6 comprises a power dissipation resistor 40, i.e. a passive circuit element lacking switching capability, such a power dissipation resistor 40 is entirely adequate for effecting a both quick and reliable braking operation without the risk of overheating. The preferred such power dissipation resistor 40 has a resistance of 3.3 Ohms and a power rating of 10 Watt.

Since the motor current is supplied by the phase voltage supply terminals 7 and the single-phase series motor 1 is advantageously driven by an AC phase voltage, the motor current will generally be an AC current, thereby flowing through the stator field coil terminals 4 and the rotor winding terminals 5 in both directions. In the braking switching state, as already observed, the braking current supplied by the rotor winding terminals 5 is a unidirectional current due to the action of the commutator connecting the rotor windings 3a to the rotor winding terminals 5. Consequently, the braking current is to flow only in a specific direction through the braking current branches 12, 13. Therefore it is preferred that the circuit arrangement comprises a current rectification element 41, 42, which current rectification element 41, 32 is preferably configured to rectify current in the direction of the braking current. In particular, the current rectification element 41, 42 is arranged within a braking current branch 12, 13. In the present embodiment of Fig. 1, there is a current rectification element 41, 42 for each of the two braking current branches 12, 14. The current rectification elements 41, 42 comprise a semiconductor diode 43, 44 each.

The hand-held power tool according to the proposal, illustrated in Fig. 2, comprises a single-phase serial motor 1 for driving the hand-held power tool, which single-phase serial motor comprises a stator 2 with stator field coils 2a as well as a rotor 3 with rotor windings 3a and a commutator. The present hand-held power tool is a power drill. The hand-held power tool according to the proposal may equally be a hammer drill or a combi hammer, i.e. a hand-held power tool which may be employed in either a hammer drill mode or a chiseling mode. The hand-held power tool according to the proposal is characterized in that it comprises a circuit arrangement for switching the single-phase series motor 1 between a motor mode and a braking mode according to the proposal.

The hand-held power tool of Fig. 2 comprises an AC power supply connection 44 for providing a phase voltage to the phase voltage supply terminals 7 of the circuit arrangement and a microcontroller 45 for controlling the circuit arrangement. The AC power supply connection 44 may be configured for electrical connection to a regular AC power supply through a wall socket.

It is preferred that the hand-held power tool comprises a motion sensor 46 or other movement detection device, in particular a micromechanical systems (MEMS) gyroscope 46a. Such a motion sensor 46, which may measure acceleration in one or more directions or an angular rate around one or more axes, may for example be used to detect a blocking condition during a drilling or a hammer drilling operation of the hand-held power tool. The MEMS gyroscope 46a may in particular be configured to measure the angular rate for three axes. In response to the detection of such a blocking condition, the microcontroller 45 may switch the single-phase series motor 1 from the motor mode to the braking mode. The use of electronic components, i.e. the MEMS gyroscope 46a and the microcontroller 45, both for detecting the blocking condition and for reacting to the blocking condition is facilitated by advantageously using triacs 9 in the switching arrangement 8 of the circuit arrangement according to the proposal rather than the mechanical switches known from the prior art.

Further preferred embodiments of the hand-held power tool according to the proposal correspond to the preferred embodiments of the circuit arrangement according to the proposal.

As illustrated in Fig. 2, the circuit arrangement may be arranged on a circuit board 47. This circuit board 47 thus provides a compact combination of the elements of the circuit arrangement. In particular, this circuit arrangement on the circuit board 47 provides a separate module for introducing rotation control and in particular braking capability to a hand-held power tool with a single-phase series motor 1.

Accordingly, a rotation control module according to the proposal for a hand-held power tool with a single-phase series motor 1 for driving the hand-held power tool is characterized in that the rotation control module comprises a circuit board 47 and a circuit arrangement according to the proposal arranged on the circuit board. The rotation control module is further characterized in that it is configured to be retrofitted to the hand-held power tool for providing a rotation control functionality and in particular braking functionality.

Referring back to the embodiment Fig. 1, the components depicted are arranged on the circuit board 47 unless surrounded by a chain line. In other words, stator 1 with stator field coils 2a, rotor 2 with rotor windings 3a, the excitation capacitor 34 and supply phase triac 39 are not arranged on the circuit board 47 and thus not compromised by the rotation control module according to this embodiment. Further preferred embodiments of the rotation control module according to the proposal correspond to the preferred embodiments of the circuit arrangement according to the proposal.

## Claims

1. Circuit arrangement for switching a single-phase series motor (1) between a motor mode and a braking mode, comprising stator field coil terminals (4) and rotor winding terminals (5) for the single-phase series motor (1), an electrical power dissipation element (6), phase voltage supply terminals (7) and a switching arrangement (8) with a motor mode switching state in which a motor current supplied by the phase voltage supply terminals (7) flows between the stator field coil terminals (4) and between the rotor winding terminals (5) and with a braking mode switching state in which a braking current supplied by the rotor winding terminals (5) at least partially, preferably substantially completely, flows between the stator field coil terminals (4) and through the electrical power dissipation element (6), wherin the switching arrangement (8) comprises one or more bidirectional triode thyristors - triacs (9) - for switching between the motor mode switching state and the braking mode switching state,
**characterized in that,**
the one or more triacs (9) comprise a motor mode triac (36) triggered on in the motor mode switching state for electrically connecting the stator field coil terminals (4) and the rotor winding terminals (5) and triggered off in the braking mode switching state.

2. Circuit arrangement according to claim 1, **characterized in that** the triacs (9) comprise at least one braking mode triac (10, 11) triggered on in the braking mode switching state for passing the braking current in a respective braking current branch (12, 13) and triggered off in the motor mode switching state.

3. Circuit arrangement according to claim 2, **characterized in that** the switching arrangement (8) comprises a gate snubber circuit (14, 15) for controlling a gate voltage between a gate node (16, 17) and a main electrode node (18, 19), preferably, an MT1 main electrode node, of the braking mode triac (10, 11).

4. Circuit arrangement according to claim 3, **characterized in that** the gate snubber circuit (14, 15) comprises a gate snubber capacitor (22, 23) and a gate snubber resistor network (24, 25), preferably, such that a gate voltage of the braking mode triac (10, 11) substantially drops across the gate snubber capacitor (22, 23), in particular, such that the gate snubber resistor network (24, 25) limits a gate current into a gate terminal of the braking mode triac (10, 11).

5. Circuit arrangement according to one of claims 2 to 4, **characterized in that**, the switching arrangement (8) comprises a braking mode optocoupler (28, 29) for triggering the braking mode triac (10, 11), preferably, wherein the gate snubber circuit (14, 15) electrically connects an output terminal of the braking mode optocoupler (28, 29) with a gate terminal of the braking mode triac (10, 11).

6. Circuit arrangement according to one of claims 2 to 5, **characterized in that** the electrical power dissipation element (6) is arranged in an electrical series connection with the braking mode triac (10, 11) in the braking current branch (12, 13).

7. Circuit arrangement according to one of claims 1 to 6, **characterized in that** the circuit arrangement comprises excitation voltage terminals (33) for applying an excitation voltage across the stator field coil terminals (4) when the switching arrangement (8) is switched in the braking mode switching state.

8. Circuit arrangement according to claim 7, **characterized in that** the circuit arrangement comprises an excitation capacitor (34) electrically connected to the excitation voltage terminals (33), preferably, further comprises an excitation resistor (35) electrically connected in series with the excitation capacitor (34).

9. Circuit arrangement according to claim 8, **characterized in that**, the excitation capacitor (34) and the excitation resistor (35) define a time constant of between 5 ms and 100 ms, preferably, of between 10 ms and 50 ms, in particular, of between 20 ms and 40 ms.

10. Circuit arrangement according to one of claims 7 to 9, **characterized in that** the excitation voltage terminals (33) are connected electrically in parallel with an electrical series connection of the stator field coil terminals (4) and the rotor winding terminals (5).

11. Circuit arrangement according to one of claims 1 to 10, **characterized in that** the one or more triacs (9) comprise a supply phase triac (39), which supply phase triac (39) is triggered on in the motor mode switching state for passing the motor current and triggered off in the braking mode switching state.

12. Circuit arrangement according to one of claims 1 to 11, **characterized in that** the electrical power dissipation element (6) comprises a power dissipation resistor (40).

13. Circuit arrangement according to one of claims 1 to 12, **characterized in that** the circuit arrangement comprises a current rectification element (41, 42), preferably, that the current rectification element (41, 42) is configured to rectify current in the direction of the braking current, in particular, that the current rectification element (41, 42) is arranged within a braking current branch (12, 13).

14. Hand-held power tool with a single-phase series motor (1) for driving the hand-held power tool, **characterized in that**, the hand-held power tool comprises a circuit arrangement according to one of claims 1 to 13 for switching the single-phase series motor (1) between a motor mode and a braking mode.

15. Rotation control module for a hand-held power tool with a single-phase series motor (1) for driving the hand-held power tool, **characterized in that** the rotation control module comprises a circuit board (47) and a circuit arrangement according to one of claims 1 to 13 arranged on the circuit board (47) and that the rotation control module is configured to be retrofitted to the hand-held power tool for providing a rotation control, in particular braking, functionality.

## Patentansprüche

1. Schaltungsanordnung zum Schalten eines einphasigen Reihenmotors (1) zwischen einer Antriebsbetriebsart und einer Bremsbetriebsart, umfassend Statorfeldspulenanschlüsse (4) und Rotorwicklungsanschlüsse (5) für den einphasigen Reihenmotor (1), ein elektrisches Leistungsverlustelement (6), Phasenspannungs-Versorgungsanschlüsse (7) und eine Schaltanordnung (8) mit einem Antriebsbetriebsart-Schaltzustand, in dem ein Antriebsstrom, der durch die Phasenspannungs-Versorgungsanschlüsse (7) geliefert wird, zwischen den Statorfeldspulenanschlüssen (4) und zwischen den Rotorwicklungsanschlüssen (5) fließt, und mit einem Bremsbetriebsart-Schaltzustand, in dem ein Bremsstrom, der durch die Rotorwicklungsanschlüsse (5) geliefert wird, mindestens teilweise, vorzugsweise im Wesentlichen vollständig, zwischen den Statorfeldspulenanschlüssen (4) und durch das elektrische Leistungsverlustelement (6) fließt, wobei die Schaltanordnung (8) eine oder mehrere bidirektionale Thyristortrioden - Triacs (9) - zum Schalten zwischen dem Antriebsbetriebsart-Schaltzustand und dem Bremsbetriebsart-Schaltzustand umfasst,
**dadurch gekennzeichnet, dass**
der eine oder die mehreren Triacs (9) einen Antriebsbetriebsart-Triac (36) umfassen, der in dem Antriebsbetriebsart-Schaltzustand eingeschaltet angesteuert ist, um die Statorfeldspulenanschlüsse (4) und die Rotorwicklungsanschlüsse (5) elektrisch zu verbinden, und in dem Bremsbetriebsart-Schaltzustand ausgeschaltet angesteuert ist.

2. Schaltungsanordnung nach Anspruch 1, **dadurch gekennzeichnet, dass** die Triacs (9) mindestens einen Bremsbetriebsart-Triac (10, 11) umfassen, der in dem Bremsbetriebsart-Schaltzustand eingeschaltet angesteuert ist, um den Bremsstrom in einem jeweiligen Bremsstromzweig (12, 13) durchzulassen, und in dem Antriebsbetriebsart-Schaltzustand ausgeschaltet angesteuert ist.

3. Schaltungsanordnung nach Anspruch 2, **dadurch gekennzeichnet, dass** die Schaltanordnung (8) eine Gate-Dämpfungsschaltung (14, 15) zum Steuern einer Gate-Spannung zwischen einem Gate-Knoten (16, 17) und einem Hauptelektrodenknoten (18, 19), vorzugsweise einem MT1-Hauptelektrodenknoten, des Bremsbetriebsart-Triacs (10, 11) umfasst.

4. Schaltungsanordnung nach Anspruch 3, **dadurch gekennzeichnet, dass** die Gate-Dämpfungsschaltung (14, 15) einen Gate-Dämpfungskondensator (22, 23) und ein Gate-Dämpfungswiderstandsnetz (24, 25) vorzugsweise derartig umfasst, dass eine Gate-Spannung des Bremsbetriebsart-Triacs (10, 11) im Wesentlichen über den Gate-Dämpfungskondensator (22, 23) insbesondere derartig abfällt, dass das Gate-Dämpfungswiderstandsnetz (24, 25) einen Gate-Strom zu einem Gate-Anschluss des Bremsbetriebsart-Triacs (10, 11) begrenzt.

5. Schaltungsanordnung nach einem der Ansprüche 2 bis 4, **dadurch gekennzeichnet, dass**, die Schaltanordnung (8) einen Bremsbetriebsart-Optokoppler (28, 29) zum Ansteuern des Bremsbetriebsart-Triacs (10, 11) umfasst, wobei vorzugsweise die Gate-Dämpfungsschaltung (14, 15) einen Ausgangsanschluss des Bremsbetriebsart-Optokopplers (28, 29) mit einem Gate-Anschluss des Bremsbetriebsart-Triacs (10, 11) elektrisch verbindet.

6. Schaltungsanordnung nach einem der Ansprüche 2 bis 5, **dadurch gekennzeichnet, dass** das elektrische Leistungsverlustelement (6) in einer elektrischen Reihenschaltung mit dem Bremsbetriebsart-Triac (10, 11) in dem Bremsstromzweig (12, 13) angeordnet ist.

7. Schaltungsanordnung nach einem der Ansprüche 1 bis 6, **dadurch gekennzeichnet, dass** die Schaltungsanordnung Erregungsspannungsanschlüsse (33) zum Anlegen einer Erregungsspannung über die Statorfeldspulenanschlüsse (4) umfasst, wenn die Schaltanordnung (8) in den Bremsbetriebsart-Schaltzustand geschaltet wird.

8. Schaltungsanordnung nach Anspruch 7, **dadurch gekennzeichnet, dass** die Schaltungsanordnung einen Erregungskondensator (34) umfasst, der mit den Erregungsspannungsanschlüssen (33) elektrisch verbunden ist, vorzugsweise weiterhin einen Erregungswiderstand (35) umfasst, der mit dem Erregungskondensator (34) elektrisch in Reihe geschaltet ist.

9. Schaltungsanordnung nach Anspruch 8, **dadurch gekennzeichnet, dass** der Erregungskondensator (34) und der Erregungswiderstand (35) eine Zeitkonstante zwischen 5 ms und 100 ms, vorzugsweise zwischen 10 ms und 50 ms, besonders bevorzugt zwischen 20 ms und 40 ms definieren.

10. Schaltungsanordnung nach einem der Ansprüche 7 bis 9, **dadurch gekennzeichnet, dass** die Erregungsspannungsanschlüsse (33) parallel mit einer elektrischen Reihenschaltung der Statorfeldspulenanschlüsse (4) und der Rotorwicklungsanschlüsse (5) elektrisch verbunden sind.

11. Schaltungsanordnung nach einem der Ansprüche 1 bis 10, **dadurch gekennzeichnet, dass** der eine oder die mehreren Triacs (9) einen Versorgungsphasen-Triac (39) umfassen, wobei der Versorgungsphasen-Triac (39) in dem Antriebsbetriebsart-Schaltzustand eingeschaltet angesteuert ist, um den Antriebsstrom durchzulassen, und in dem Bremsbetriebsart-Schaltzustand ausgeschaltet angesteuert ist.

12. Schaltungsanordnung nach einem der Ansprüche 1 bis 11, **dadurch gekennzeichnet, dass** das elektrische Leistungsverlustelement (6) einen Leistungsverlustwiderstand (40) umfasst.

13. Schaltungsanordnung nach einem der Ansprüche 1 bis 12, **dadurch gekennzeichnet, dass** die Schaltungsanordnung ein Stromgleichrichtungselement (41, 42) umfasst, dass das Stromgleichrichtungselement (41, 42) vorzugsweise konfiguriert ist, Strom in der Richtung des Bremsstroms gleichzurichten, dass das Stromgleichrichtungselement (41, 42) insbesondere innerhalb eines Bremsstromzweigs (12, 13) angeordnet ist.

14. Tragbares Elektrowerkzeug mit einem einphasigen Reihenmotor (1) zum Antreiben des tragbaren Elektrowerkzeugs, **dadurch gekennzeichnet, dass** das tragbare Elektrowerkzeug eine Schaltungsanordnung nach einem der Ansprüche 1 bis 13 zum Schalten des einphasigen Reihenmotors (1) zwischen einer Antriebsbetriebsart und einer Bremsbetriebsart umfasst.

15. Rotationssteuerungsmodul für ein tragbares Elektrowerkzeug mit einem einphasigen Reihenmotor (1) zum Antreiben des tragbaren Elektrowerkzeugs, **dadurch gekennzeichnet, dass** das Rotationssteuerungsmodul eine Schaltungsplatine (47) und eine Schaltungsanordnung nach einem der Ansprüche 1 bis 13 umfasst, die auf der Schaltungsplatine (47) angeordnet ist, und dass das Rotationssteuerungsmodul konfiguriert ist, an dem tragbaren Elektrowerkzeug nachgerüstet zu werden, um eine Funktionalität der Rotationssteuerung, insbesondere des Bremsens, bereitzustellen.

## Revendications

1. Agencement de circuits destiné à commuter un moteur série monophasé (1) entre un mode moteur et un mode frein, comprenant des bornes de bobine de champ de stator (4) et des bornes d'enroulement de rotor (5) pour le moteur série monophasé (1), un élément de dissipation de puissance électrique (6), des bornes de fourniture de tension de phase (7) et un agencement de commutation (8) comportant un état de commutation en mode moteur dans lequel le courant de moteur fourni par les bornes de fourniture de tension de phase (7) circule entre les bornes de bobine de champ de stator (4) et entre les bornes d'enroulement de rotor (5), et comportant un état de commutation en mode frein dans lequel un courant de freinage fourni par les bornes d'enroulement de rotor (5) s'écoule au moins partiellement, de préférence pratiquement complètement, entre les bornes de bobine de champ de stator (4) et au travers de l'élément de dissipation de puissance électrique (6), l'agencement de commutation (8) comprenant un ou plusieurs thyristors à triode bidirectionnels ou triacs (9) destinés à réaliser la commutation entre l'état de commutation en mode moteur et l'état de commutation en mode frein,
**caractérisé en ce que,**
le ou les triacs (9) comprennent un triac de mode moteur (36) déclenché à l'état passant dans l'état de commutation en mode moteur afin de relier électriquement les bornes de bobine de champ de stator (4) et les bornes d'enroulement de rotor (5), et déclenché à l'état bloqué dans l'état de commutation en mode frein.

2. Agencement de circuits selon la revendication 1, **caractérisé en ce que** les triacs (9) comprennent au moins un triac de mode frein (10, 11) déclenché à l'état passant dans l'état de commutation en mode frein afin de faire passer le courant de freinage dans une branche respective (12, 13) de courant de freinage, et déclenché à l'état bloqué dans l'état de commutation en mode moteur.

3. Agencement de circuits selon la revendication 2, **caractérisé en ce que** l'agencement de commutation (8) comprend un circuit amortisseur de grille (14, 15) destiné à commander la tension de grille entre un noeud de grille (16, 17) et un noeud d'électrode principale (18, 19), de préférence un noeud d'électrode principale MT1 du triac de mode frein (10, 11).

4. Agencement de circuits selon la revendication 3, **caractérisé en ce que** le circuit amortisseur de grille (14, 15) comprend un condensateur amortisseur de grille (22, 23) et un réseau de résistances amortisseur de grille (24, 25), de préférence tels que la tension de grille du triac de mode frein (10, 11) chute sensiblement aux bornes du condensateur amortisseur de grille (22, 23), en particulier tels que le réseau de résistances amortisseur de grille (24, 25) limite le courant de grille dans la borne de grille du triac de mode frein (10, 11).

5. Agencement de circuits selon l'une des revendications 2 à 4, **caractérisé en ce que** l'agencement de commutation (8) comprend un photocoupleur de mode frein (28, 29) destiné à déclencher le triac de mode frein (10, 11), de préférence dans lequel le circuit amortisseur de grille (14, 15) relie électriquement la borne de sortie du photocoupleur de mode frein (28, 29) à la borne de grille du triac de mode frein (10, 11).

6. Agencement de circuits selon l'une des revendications 2 à 5, **caractérisé en ce que** l'élément de dissipation de puissance électrique (6) est agencé en une liaison série électrique avec le triac de mode frein (10, 11) dans la branche de courant de frein (12, 13).

7. Agencement de circuits selon l'une des revendications 1 à 6, **caractérisé en ce que** l'agencement de circuits comprend des bornes de tension d'excitation (33) destinées à appliquer une tension d'excitation sur les bornes de bobine de champ de stator (4) lorsque l'agencement de commutation (8) est commuté à l'état de commutation en mode frein.

8. Agencement de circuits selon la revendication 7, **caractérisé en ce que** l'agencement de circuits comprend un condensateur d'excitation (34) relié électriquement aux bornes de tension d'excitation (33) et comprend en outre de préférence une résistance d'excitation (35) reliée électriquement en série avec le condensateur d'excitation (34).

9. Agencement de circuits selon la revendication 8, **caractérisé en ce que** le condensateur d'excitation (34) et la résistance d'excitation (35) définissent une constante de temps comprise entre 5 ms et 100 ms, de préférence entre 10 ms et 50 ms, en particulier entre 20 ms et 40 ms.

10. Agencement de circuits selon l'une des revendications 7 à 9, **caractérisé en ce que** les bornes de tension d'excitation (33) sont reliées électriquement en parallèle à une connexion électrique série des bornes de bobine de champ de stator (4) et des bornes d'enroulement de rotor (5).

11. Agencement de circuits selon l'une des revendications 1 à 10, **caractérisé en ce que** le ou les triacs (9) comprennent un triac de phase d'alimentation (39), ledit triac de phase d'alimentation (39) étant déclenché à l'état passant dans l'état de commutation en mode moteur afin de faire passer le courant de moteur, et il est déclenché à l'état bloqué dans l'état de commutation en mode frein.

12. Agencement de circuits selon l'une des revendications 1 à 11, **caractérisé en ce que** l'élément de dissipation de puissance électrique (6) comprend une résistance de dissipation de puissance (40).

13. Agencement de circuits selon l'une des revendications 1 à 12, **caractérisé en ce que** l'agencement de circuits comprend un élément de redressement de courant (41, 42), de préférence **en ce que** l'élément de redressement de courant (41, 42) est configuré pour redresser le courant dans le sens du courant de freinage, en particulier **en ce que** l'élément de redressement de courant (41, 42) est agencé à l'intérieur d'une branche de courant de freinage (12, 13).

14. Outil électrique à main comportant un moteur série monophasé (1) destiné à entraîner l'outil électrique à main, **caractérisé en ce que** l'outil électrique à main comprend un agencement de circuits conforme à l'une des revendications 1 à 13 permettant de commuter le moteur série monophasé (1) entre un mode moteur et un mode frein.

15. Module de commande de rotation pour un outil électrique à comportant un moteur série monophasé (1) destiné à entraîner l'outil électrique à main, **caractérisé en ce que** le module de commande de rotation comprend une carte à circuit imprimé (47) et un agencement de circuits conforme à l'une des revendications 1 à 13 disposé sur la carte à circuit imprimé (47), et **en ce que** le module de commande de rotation est configuré pour être adapté sur l'outil électrique à main afin de fournir une fonction de commande de rotation, en particulier de freinage.
